# EUROPÄISCHE PATENTSCHRIFT

(11) **EP 1 644 232 B1**
(45) Veröffentlichungstag und Bekanntmachung des Hinweises auf die Patenterteilung: **13.02.2008**
(21) Anmeldenummer: 04741943.7
(22) Anmeldetag: 01.07.2004
(51) Int. Cl.: B60T 13/567

(54) **BREMSKRAFTVERSTÄRKER**
BRAKE BOOSTER
SERVOFREIN

(30) Priorität: 01.07.2003 DE 10329488
(43) Veröffentlichungstag der Anmeldung: 12.04.2006
(73) Patentinhaber: Continental Teves AG & Co. oHG, 60488 Frankfurt am Main (DE)
(72) Erfinder: FALLER, Jürgen, 63796 Kahl (DE)
(86) Internationale Anmeldenummer: PCT/EP2004/051324
(87) Internationale Veröffentlichungsnummer: WO 2005/002940

(56) Entgegenhaltungen:
- AU-B- 546 873
- DE-A- 4 228 656
- DE-A- 19 832 357

## Beschreibung

Die Erfindung betrifft einen Bremskraftverstärker für ein Kraftfahrzeug, nach dem Oberbegriff des Patentanspruchs 1.

Aus der DE 198 32 357 A1 ist ein Bremskraftverstärker für ein Kraftfahrzeug bekannt, der in Parallelanordnung zu einer Druck-und Kolbenstange mehrere Verbindungsbolzen aufweist, die das Gehäuse des Bremskraftverstärkers durchdringen. Die zu beiden Seiten des Gehäuses hervorstehenden Enden der Verbindungsbolzen weisen jeweils einen konzentrisch zur Bolzenlängsachse ausgerichteten Befestigungsabschnitt auf, um den Bremskraftverstärker mit einem Hauptbremszylinder und mit den Aufnahmebohrungen einer Spritzwand des Kraftfahrzeugs verbinden zu können.

Durch den gewählten Aufbau des Bremskraftverstärkers müssen die Abstände der Verbindungsbolzen, das Gehäuse als auch die Gehäuse-Innenteile individuell an die verschiedenen Abstände der Aufnahmebohrungen in der Spritzwand und damit jeweils an das fahrzeugspezifische Anschlussbild an der Spritzwand angepasst werden.

Aus der AU 546 873 B ist ein gattungsgemäßer Bremskraftverstärker mit einem Verbindungsbolzen bekannt, welcher einen gekrümmten Abschnitt und einen sich daran anschließenden, zum Verbindungsbolzen exzentrisch ausgerichteten Befestigungsabschnitt aufweist. Ein Anschlag des Verbindungsbolzens dient als Anschlag für ein Hauptbremszylindergehäuse. Als nachteilig wird angesehen, dass der Verbindungsbolzen lediglich in einer vorgegebenen Einbaulage im Bremskraftverstärker vorgesehen werden kann.

Daher ist es die Aufgabe der Erfindung, einen Bremskraftverstärker der angegebenen Art mit möglichst geringem Aufwand derart zu verbessern, dass die vorgenannten Nachteile weitgehend vermieden werden.

Diese Aufgabe wird erfindungsgemäß für einen Bremskraftverstärker der angegebenen Art mit den kennzeichnenden Merkmalen des Patentanspruchs 1 gelöst.

Weitere Merkmale, Vorteile und Anwendungsmöglichkeiten der Erfindung gehen aus den Unteransprüchen und der nachfolgenden Beschreibung mehrerer Ausführungsbeispiele anhand von Zeichnungen hervor.

Es zeigen:
- Figur 1: eine Teilansicht eines Bremskraftverstärkers im Längsschnitt mit dem erfindungswesentlichen Merkmal eines exzentrisch am Verbindungsbolzen angeordneten Befestigungsabschnitt,
- Figur 2: eine vergrößerte Perspektivansicht des in Figur 1 gezeigten Verbindungsbolzens,
- Figur 3: eine sinnvolle Ausgestaltung des in Figur 1 abgebildeten Bremskraftverstärkers in einer Teilansicht, mit einer als Langloch ausgestalteten Öffnung im Gehäuse zur Hindurchführung eines exzentrisch am Verbindungsbolzen angebrachten Befestigungsabschnitts,
- Figur 4: eine um eine Halbdrehung im Langloch versetzte Anordnung des aus Figur 3 bekannten Verbindungsbolzens zwecks Anpassung des Bolzenabstands an einen vergrößerten Lochabstand in der Spritzwand eines Kraftfahrzeugs,
- Figur 5: eine Innenansicht einer Gehäusehälfte zur Verdeutlichung der Anordnung von zwei diametralen Langlöchern im Gehäuse, die zwischen mehreren an der Innenseite des Gehäuses eingeformten Führungsflächen angeordnet sind,
- Figur 6: eine Perspektivdarstellung eines Verbindungsbolzens mit einer zur Abdichtung im Langloch angepassten Kontur,
- Fig. 7,8: jeweils zwei parallel zueinander angeordnete Verbindungsbolzen, die unter Einhaltung eines konstanten Achsabstandes unterschiedliche Achsabstände der Befestigungsabschnitte für unterschiedliche Lochabstände in einer Spritzwand eines Kraftfahrzeugs ermöglichen.

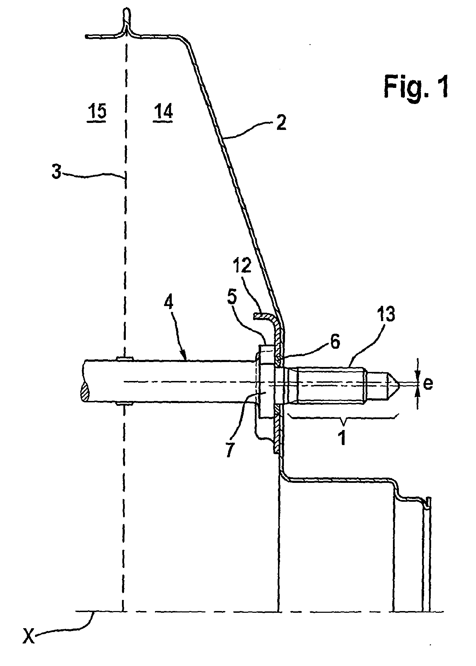

Die Fig. 1 zeigt in einer skizzenhaften Teilansicht lediglich die für die Erfindung wesentlichen Teile eines pneumatischen Bremskraftverstärkers im Längsschnitt, der auf an sich bekannte Weise mit wenigstens einem längsbeweglichen, jedoch in der Zeichnung nicht detailliert abgebildeten Arbeitskolben 3 innerhalb eines zweiteiligen, schalenförmigen Gehäuses 2 versehen ist. Der Arbeitskolben unterteilt das Gehäuse 2 in wenigstens zwei Kammern 14, 15, wobei der im Gehäuse 2 abgedichtete Arbeitskolben 3 abhängig von einer an einer Kolbenstange wirksamen Kraft eine Kraft auf eine mit einem Hauptbremszylinder verbindbare Druckstange überträgt, sobald der Arbeitskolben unter der Wirkung eines zwischen den beiden Kammern 14, 15 herrschenden Druckdifferenz steht.

Aus der Figur 1 geht ein von zwei Verbindungsbolzen 4 hervor, dessen das Gehäuse 2 und den Arbeitskolben durchdringender Bolzenabschnitt parallel zur abgebildeten Längsachse X des Gehäuses 2 angeordnet ist. Das aus dem Gehäuse 2 hervorstehende Ende des Verbindungsbolzens 4 ist bekanntlich zur Fixierung des Bremskraftverstärkers an einer Spritzwand eines Kraftfahrzeugs mit einem Befestigungsabschnitt 1 versehen.

Die Erfindung sieht für alle in den Figuren 1 bis 7 gezeigten Ausführungsbeispiele vor, dass der Befestigungsabschnitt 1 gegenüber dem das Gehäuse 2 und den Arbeitskolben 3 durchdringenden Abschnitt des Verbindungsbolzens 4 exzentrisch ausgerichtet ist.

Wie die nachfolgenden Zeichnungen verdeutlichen, ist es durch die Exzentrizität des Befestigungsabschnitts 1 am Verbindungsbolzen 4 erstmals möglich, unterschiedliche Anschlussmaße an der Spritzwand mit überwiegend gleichen Bauteilen des Bremskraftverstärkers zu realisieren.

Ferner geht aus der Figur 1 hervor, dass zwischen dem Abschnitt des Verbindungsbolzens 4 und dem dazu exzentrisch ausgerichteten Befestigungsabschnitt 1 ein plattenförmiger Anschlag 5 vorgesehen ist, an dessen der Innenseite des Gehäuses 2 zugewandten Stirnfläche eine Dichtung 6 angeordnet ist. Zwischen dem Anschlag 5 und der Innenseite des Gehäuses 2 ist eine Versteifungsscheibe 1) fixiert, deren Öffnung an das Loch im Gehäuse 2 angepasst ist. Der Befestigungsabschnitt 1 ist mit einem Bolzengewinde 13 versehen, das sich zur Montage des Bremskraftverstärkers an der Spritzwand durch eine Bohrung in der Spritzwand des Kraftfahrzeugs erstreckt.

Obwohl in Figur 1 nicht ausgeführt, befindet sich spiegelsymmetrisch zur Längsachse X der weitere Verbindungsbolzen 4 im Gehäuse 2, der gleichfalls mit einem exzentrischen Befestigungsabschnitt 1 versehen ist, so dass gleichmäßig über dem Gehäuseumfang verteilt wenigstens ein paar Verbindungsbolzen 4 angeordnet sind, deren Befestigungsabschnitte 1 mit Bolzengewinden 13 versehen sind, die sich durch ihre Exzenterverstellung optimal an den Lochabstand in der Spritzwand anpassen lassen. Die durch die Löcher in der Spritzwand ragenden Befestigungsabschnitte 1 werden in der Fahrzeugzelle mit Sicherungsmuttern versehen.

Obwohl im vorliegenden Ausführungsbeispiel der konstante Achsabstand zwischen den beiden Verbindungsbolzen 4 im Gehäuse 101,8 Millimeter beträgt, lässt sich durch die erfindungsgemäße exzentrische Anordnung der beiden Befestigungsabschnitte 1 außerhalb des Gehäuses 2 in einer ersten Exzenterstellung ein Achsabstand von 100 Millimeter realisieren, da in vorliegendem Beispiel jeder der beiden Befestigungsabschnitte an den Verbindungsbolzen um das Exzentermaß e=0,9 Millimeter in Richtung der Längsachse X versetzt ist. Damit passt der Bremskraftverstärker in die mit einem Lochabstand von 100 Millimeter versehenen beiden Löcher in der Spritzwand, ohne dass es einer Anpassung der Teileabmessungen innerhalb des Gehäuses 2 bedarf.

Alternativ erhält man bei einer um 180 Grad entgegengesetzten Bolzenverdrehung einen Abstand der Befestigungsabschnitte von 101,8 Millimeter, so dass die selben Verbindungsbolzen 4 mit den selben Abstandsmaßen innerhalb des Gehäuses 2 vorteilhaft für unterschiedliche Loch- bzw. Bohrungsabständen in der Spritzwand verwendet werden können.

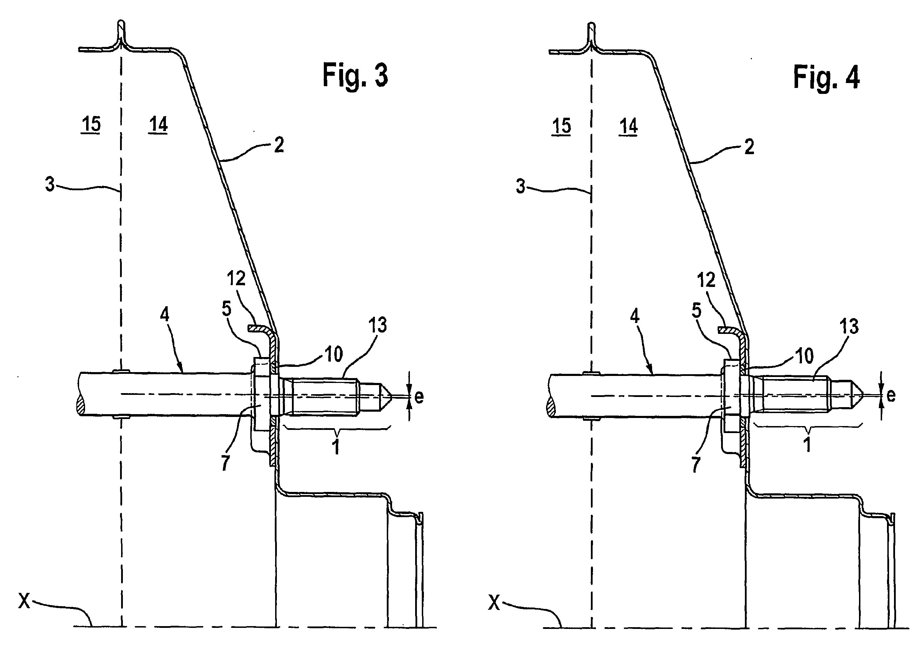

In vorliegendem Ausführungsbeispiel ist somit je nach erforderlichem Achsabstand der beiden Befestigungsabschnitte 1 lediglich die der Spritzwand zugewandte Schalenhälfte des Gehäuses 2 zu wechseln, sofern nicht auf die in den Figuren 3 bis 6 vorgeschlagene vorteilhafte Ausgestaltung der Erfindung zurückgegriffen wird.

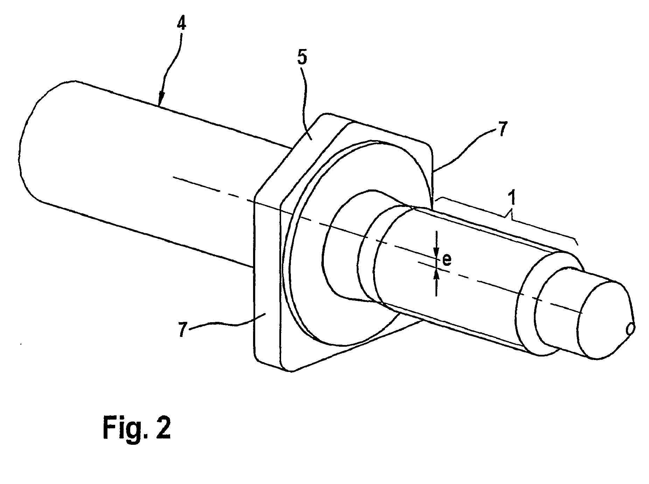

Zunächst soll jedoch anhand der Figur 2, die eine vergrößerte Perspektivansicht des einen in Figur 1 gezeigten Verbindungsbolzens 4 wiedergibt, die weiteren zweckmäßigen Ausgestaltungsdetails erläutert werden. Der Verbindungsbolzen 4 weist nämlich mehrere Führungsflächen 7 auf, die formschlüssig mit entsprechenden, an der Innenseite des Gehäuses 2 angeordneten Führungsflächen 8 in Eingriff stehen.
Diese Führungsflächen 7 am Umfang des Anschlags 5 dienen zur Lageorientierung des Befestigungsabschnitts 1 im Gehäuse 2 und bilden bevorzugt ein asymmetrisches Mehrkantprofil, das die Variationsmöglichkeiten zur Verdrehlage des Befestigungsabschnitts 1 im Sinne einer präzisen Ausrichtung sowie zum Zwecke der Verdrehsicherung der Befestigungsabschnitte 1 festlegt.

Ferner geht aus Figur 2 hervor, dass der bolzenförmige Befestigungsabschnitt 1 auf der Stirnfläche des plattenförmigen Anschlags 5 um das Exzentermaß e aus der Längsachse des Verbindungsbolzens 4 versetzt ist, so dass die formschlüssige Ausrichtung des Verbindungsbolzens 4 im Gehäuse 2 zweckmäßigerweise vom Achsenversatz unberührt bleibt.

Die Figur 3 zeigt abweichend von den bisherigen Ausführungsformen in den Figuren 1, 2 nunmehr eine weitere vorteilhafte Ausgestaltung der Erfindung, wonach der Befestigungsabschnitt 1 des Verbindungsbolzens 4 durch eine Öffnung des Gehäuses 2 ragt, die zur Variationsmöglichkeit der Verdrehlage des Befestigungsabschnitts 1 als Langloch 9 ausgeführt ist. Dies hat den Vorteil, dass auf die bereits erwähnte Verwendung unterschiedlicher Gehäuse 2, deren hintere Gehäuseschale zur Hindurchführung der Befestigungsabschnitte 1 an die unterschiedlichen Achsabstände der beiden Befestigungsabschnitte 1 angepasst sein muß, verzichtet werden kann. Durch die Anordnung von Langlöchern 9 im Gehäuse 2 entfällt somit das bezüglich den Figuren 1, 2 genannte Gehäuseauswahlverfahren.

In den Figuren 3 und 4 beträgt beispielsweise das Exzentermaß e=0,45 Millimeter, wobei in Figur 3 beide parallel unter- und oberhalb zur Längsachse X angeordneten Verbindungsbolzen 4 mit ihren Befestigungsabschnitten analog zu Figur 1 um das Exzentermaß e zur Längsachse X gedreht sind, während in Figur 4 die beiden Befestigungsabschnitte 1 um eine Halbdrehung um das Exzentermaß e in entgegengesetzter Richtung nach außen verschwenkt sind. Damit ergibt sich bei konstantem Achsabstand der Verbindungsbolzen 4 von 100,9 Millimeter entweder ein Achsabstand der Befestigungsabschnitte 1 von 100 Millimeter (siehe Fig. 3) oder 101,8 Millimeter (siehe Fig. 4), so dass je nach vorliegendem Bohrungsabstand in der Spritzwand die eine oder andere vorbeschriebene Montageausrichtung der beiden Verbindungsbolzen 4 innerhalb den vertikalen Langlöchern 9 im einheitlich verwendeten einzigen Gehäuse 2 erfolgt. Einer Gehäuseauswahl bedarf es folglich nicht mehr.

Zwischen dem Anschlag 5 und der Innenseite des Gehäuses 2 ist für jeden Verbindungsbolzen 4 eine Versteifungsscheibe 12 fixiert, deren Öffnung an das Langloch 9 im Gehäuse 2 angepasst ist, so dass auch bezüglich der Versteifungsscheibe 12 eine einzige Scheibenbauform für verschiedene Achsabstände der Befestigungselemente 1 verwendet werden kann.

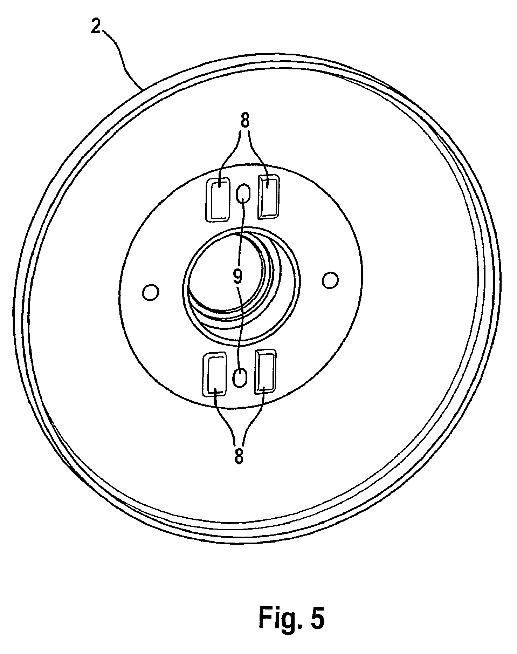

Die Figur 5 zeigt in räumlicher Darstellung eine Innenansicht eine Schalenhälfte des Gehäuses 2 zur Verdeutlichung der Anordnung der zwei vertikalen Langlöchern 9 im Gehäuse 2, die zwischen mehreren an der Innenseite des Gehäuses 2 nassenförmig eingepressten Führungsflächen 8 angeordnet sind. Die mittig im Gehäuse 2 angeordnete große Öffnung dient zur Aufnahme eines an sich bekannten Steuergehäuses, in das die diversen Ventilbauteile und die Kolbenstange eingesetzt sind.

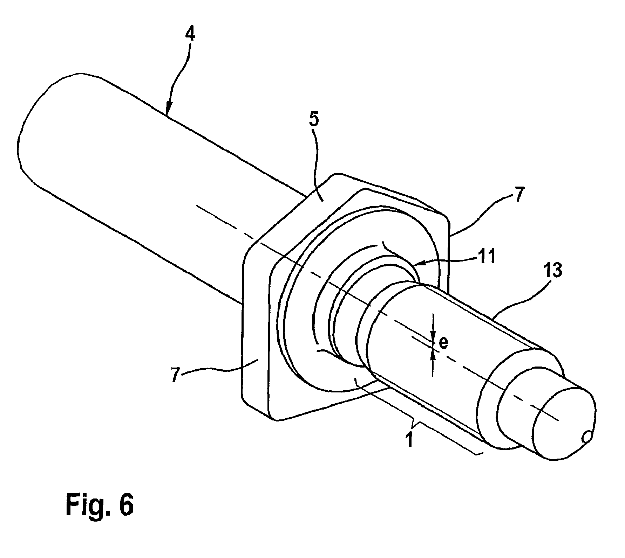

Die Figur 6 zeigt bezugnehmend auf die Figuren 3, 4 eine Perspektivdarstellung eines der beiden Verbindungsbolzen 4 mit einer zur Abdichtung im Langloch 9 des Gehäuses 2 angepassten Kontur, wozu der Anschlag 5 an der zur Gehäuseinnenseite zugewandten Stirnfläche eine an das Langloch 9 angepasste Abdichtkontur 11 aufweist, an der die in den Figuren 3, 4 abgebildete Dichtung 10 nach dem Zusammenbau mit der Versteifungsscheibe 12 anliegt.

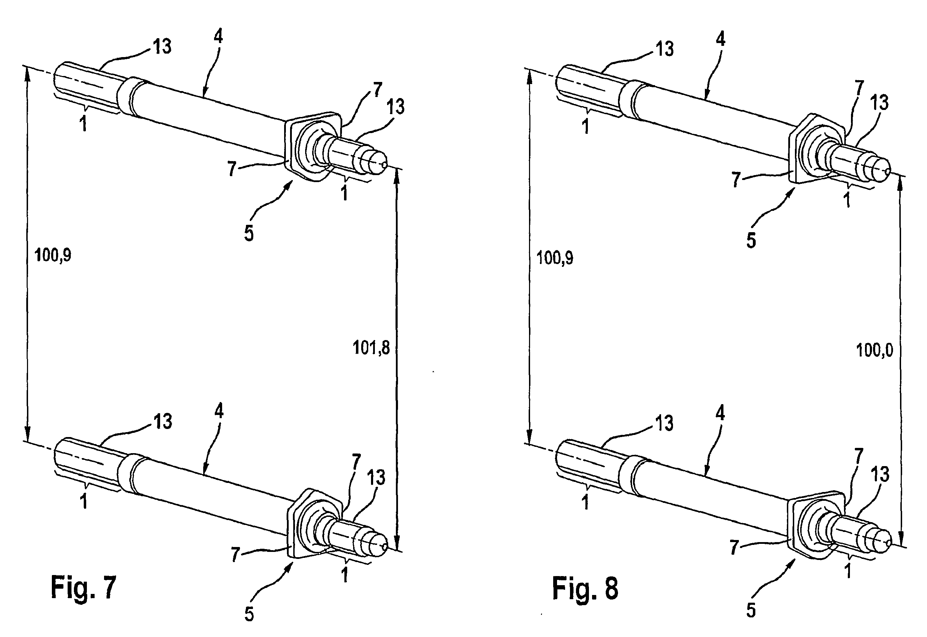

Die Figuren 7, 8 verdeutlichen die bereits beschriebenen unterschiedlichen Einbaulagen der beiden Verbindungsbolzen 4 im Gehäuse 2, wobei durch das gewählte asymmetrische Mehrkantprofil an den Anschlägen 5 nicht nur eine einfache Verdrehsicherung geschaffen ist, sondern auch die Montagelage und damit der gewählte Achsabstand der beiden Befestigungselemente 1 an den Verbindungsbolzen 4 visuell leicht erkannt werden kann. Aufwendiges Messen des Achsabstands zwischen den beiden Befestigungselementen 1 kann somit entfallen.

In der Darstellung nach Figur 7 sind die aus mehreren Führungsflächen 7 gebildeten Spitzen der Mehrkantprofile an beiden Verbindungsbolzen 4 aufeinander zugewandt, was in vorliegendem Beispiel einer maximalen exzentrischen Auslenkung der beiden Befestigungselemente 1 um 2 x 0,45 Millimeter entspricht (vergleiche Figur 4), so dass der Achsabstand der beiden Befestigungsabschnitte 101,8 Millimeter (bei konstantem Abstand der Verbindungsbolzen von 100,9 Millimeter) beträgt.

Demgegenüber sind in der Darstellung nach Figur 8 die Spitzen der Mehrkantprofile an beiden Verbindungsbolzen 4 voneinander abgewandt, was in vorliegendem Beispiel infolge der nach innen gekehrten Befestigungselementen 1 einem Achsabstand von 100 Millimeter entspricht (vergleiche Figur 3).

Selbstverständlich lässt sich der Erfindungsgedanke auch auf einen Bremskraftverstärker anwenden, die nicht über einen das Gehäuse beidseitig durchdringenden Verbindungsbolzen verfügen, sondern der lediglich an der hinteren Gehäuseschale über einen an einem Anschlag angebrachten Befestigungsabschnitt verfügt, so dass durch eine außermittige (exzentrische) Anordnung des Befestigungsabschnitts am Anschlag analog zu den bisherigen Erläuterungen unterschiedliche Achsabstände zwischen den Befestigungsabschnitten zur Anpassung an den Bohrungsabstand in der Spritzwand eingestellt werden können.

### Bezugszeichenliste

- 1: Befestigungsabschnitt
- 2: Gehäuse
- 3: Arbeitskolben
- 4: Verbindungsbolzen
- 5: Anschlag
- 6: Dichtung
- 7: Führungsfläche
- 8: Führungsfläche
- 9: Langloch
- 10: Dichtung
- 11: Abdichtkontur
- 12: Versteifungsscheibe
- 13: Bolzengewinde
- 14: Kammer
- 15: Kammer
- e: Exzentermaß
- X: Längsachse

## Patentansprüche

1. Bremskraftverstärker für ein Kraftfahrzeug, mit wenigstens einem längsbeweglichen Arbeitskolben (3) in einem Gehäuse (2), der das Gehäuse (2) in wenigstens zwei Kammern (14,15) unterteilt, wobei der im Gehäuse (2) abgedichtete Arbeitskolben (3) abhängig von einer an einer Kolbenstange wirksamen Kraft eine Kraft auf eine mit einem Hauptbremszylinder verbindbare Druckstange überträgt, wenn der Arbeitskolben (3) unter der Wirkung einer zwischen den beiden Kammern (14,15) herrschenden Druckdifferenz steht, mit wenigstens einem parallel zur Druck- und Kolbenstange das Gehäuse (2) und den Arbeitskolben (3) durchdringenden Abschnitt eines Verbindungsbolzen (4), dessen aus dem Gehäuse (2) hervorstehende Enden jeweils einen Befestigungsabschnitt (1) zur Verbindung des Bremskraftverstärkers mit dem Hauptbremszylinder und einer Spritzwand des Kraftfahrzeugs aufweist, wobei der Befestigungsabschnitt (1) gegenüber dem das Gehäuse (2) und den Arbeitskolben (3) durchdringenden Abschnitt des Verbindungsbolzens (4) exzentrisch ausgerichtet ist und zwischen dem Abschnitt des Verbindungsbolzens (4) und dem dazu exzentrisch ausgerichteten Befestigungsabschnitt (1) ein Anschlag (5) vorgesehen ist, **dadurch gekennzeichnet, dass** zur Lageorientierung des Befestigungsabschnitts (1) am Gehäuse (2) mehrere am Umfang des Anschlags (5) verteilte Führungsflächen (7) ein asymmetrisches Mehrkantprofil bilden, das die Variationsmöglichkeiten zur Verdrehlage des Befestigungsabschnitts (1) vorbestimmt .

2. Bremskraftverstärker nach Anspruch 1, **dadurch gekennzeichnet, dass** an einer der Innenseite des Gehäuses (2) zugewandten Stirnfläche des Anschlages (5) eine Dichtung (6) angeordnet ist.

3. Bremskraftverstärker nach Anspruch 2, **dadurch gekennzeichnet, dass** wenigstens eine der Führungsflächen (7) formschlüssig mit einer, an der Innenseite des Gehäuses (2) angeordneten Führungsfläche (8) in Eingriff steht.

4. Bremskraftverstärker nach einem der vorangegangenen Ansprüche, **dadurch gekennzeichnet, dass** der Befestigungsabschnitt (1) des Verbindungsbolzens (4) durch eine Öffnung des Gehäuses (2) ragt, die zur Variationsmöglichkeit der Verdrehlage des Befestigungsabschnitts (1) als Langloch (9) ausgeführt ist.

5. Bremskraftverstärker nach Anspruch 4, **dadurch gekennzeichnet, dass** das Langloch (9) mittels einer Dichtung (10) verschlossen ist, die an einem Anschlag (5) angebracht ist, der eine an das Langloch (9) angepasste Abdichtkontur (11) zur Aufnahme der Dichtung (10) aufweist.

6. Bremskraftverstärker nach Anspruch 5, **dadurch gekennzeichnet, dass** zwischen dem Anschlag (5) und der Innenseite des Gehäuses (2) eine Versteifungsscheibe (12) fixiert ist, deren Öffnung an das Langloch (9) im Gehäuse (2) angepasst ist.

7. Bremskraftverstärker nach einem der vorangegangenen Ansprüche, **dadurch gekennzeichnet, dass** mehrere Verbindungsbolzen (4) im Gehäuse (2) gleichmäßig verteilt über dem Gehäuseumfang angeordnet sind, deren Befestigungsabschnitte (1) mit einem Bolzengewinde (13) versehen sind, das sich jeweils durch eine Bohrung in einer Spritzwand eines Kraftfahrzeugs erstreckt.

## Claims

1. Brake booster for a motor vehicle, with at least one longitudinally movable working piston (3) in a housing (2), which subdivides the housing (2) into at least two chambers (14, 15), with the working piston (3) sealed in the housing (2) transmitting a force onto a push rod connectible to a master brake cylinder depending on a force acting upon a piston rod, when the working piston (3) is subjected to the effect of a difference in pressure prevailing between the two chambers (14, 15), with at least one portion of a connecting pin (4) penetrating the housing (2) and the working piston (3) in parallel to the push rod and piston rod, each of the ends of the pin projecting from the housing (2) including a fixing portion (1) for connecting the brake booster to the master brake cylinder and a splashboard of the motor vehicle, with the fixing portion (1) being aligned eccentrically relative to the portion of the connecting pin (4) that penetrates the housing (2) and the working piston (3), and a stop (5) beings provided between the portion of the connecting pin (4) and the fixing portion (1) that is aligned eccentrically thereto,
c h a r a c t e r i z e d in that for the position orientation of the fixing portion (1) on the housing (2), several guiding surfaces (7) distributed at the periphery of the stop (5) form an asymmetric multiple-cornered profile, which predetermines the possible variations for the twisted position of the fixing portion (1).

2. Brake booster as claimed in claim 1,
**characterized in that** a seal (6) is arranged at an end surface of the stop (5) facing the inside surface of the housing (2).

3. Brake booster as claimed in claim 2,
**characterized in that** at least one of the guiding surfaces (7) is positively engaged with a guiding surface (8) arranged at the inside surface of the housing (2) .

4. Brake booster as claimed in any one of the preceding claims,
**characterized in that** the fixing portion (1) of the connecting pin (4) extends through an opening in the housing (2), which is designed as an elongated hole (9) for the possible variation of the twisted position of the fixing portion (1).

5. Brake booster as claimed in claim 4,
**characterized in that** the elongated hole (9) is closed by means of a seal (10), which is fitted at a stop (5) having a sealing contour (11) adapted to the elongated hole (9) for the accommodation of the seal (10).

6. Brake booster as claimed in claim 5,
**characterized in that** a reinforcing disc (12) is fixed between the stop (5) and the inside surface of the housing (2), the opening of the reinforcing disc being adapted to the elongated hole (9) in the housing (2) .

7. Brake booster as claimed in any one of the preceding claims,
**characterized in that** several connecting pins (4) in the housing (2) are evenly distributed over the housing periphery, and the fixing portions (1) of the connecting pins are provided with a male thread (13) respectively extending through a bore in a splashboard of a motor vehicle.

## Revendications

1. Servofrein pour véhicule automobile, comprenant au moins un piston de travail (3) mobile longitudinalement à l'intérieur d'un boîtier (2), qui divise le boîtier (2) en au moins deux chambres (14, 15), dans lequel le piston de travail (3) rendu étanche dans le boîtier (2) en fonction d'une force agissant sur une tige de piston, transmet une force à une tige de compression qui peut être raccordée à un cylindre de frein principal, lorsque le piston de travail (3) est soumis à l'action d'une différence de pression régnant entre les deux chambres (14, 15), au moins une section d'un boulon d'assemblage (4) parallèle à la tige de compression et à la tige de piston traversant le boîtier (2) et le piston de travail (3), section dont les extrémités faisant saillie du boîtier (2) présentent respectivement une section de fixation (1) pour raccorder le servofrein au cylindre de frein principal et à un tablier anti-projections du véhicule automobile, dans lequel la section de fixation (1) est alignée de manière excentrique par rapport à la section du boulon d'assemblage (4) traversant le boîtier (2) et le piston de travail (3), et dans lequel une butée (5) est prévue entre la section du boulon d'assemblage (4) et la section de fixation (1) excentrique par rapport à celle-ci, **caractérisé en ce que**, pour orienter la position de la section de fixation (1) sur le boîtier (2), plusieurs surfaces de guidage (7) réparties uniformément sur la périphérie de la butée (5) forment un profilé asymétrique polygonal qui prédéfinit les possibilités de variation de la position en rotation de la section de fixation (1).

2. Servofrein selon la revendication 1, **caractérisé en ce qu'**un joint étanche (6) est aménagé sur une face avant de la butée (5) tournée vers la face intérieure du boîtier (2).

3. Servofrein selon la revendication 2, **caractérisé en ce qu'**au moins l'une des surfaces de guidage (7) est en prise par adaptation de formes avec une surface de guidage (8) aménagée sur la face intérieure du boîtier (2).

4. Servofrein selon l'une quelconque des revendications précédentes, **caractérisé en ce que** la section de fixation (1) du boulon d'assemblage (4) fait saillie à travers une ouverture du boîtier (2), qui est ménagée sous la forme d'un trou allongé (9) pour des possibilités de variation de la position de torsion de la section de fixation (1).

5. Servofrein selon la revendication 4, **caractérisé en ce que** le trou allongé (9) est fermé au moyen d'un joint étanche (10) qui est disposé sur une butée (5) qui présente un contour d'étanchéité (11) adapté au trou allongé (9) pour recevoir le joint étanche (10).

6. Servofrein selon la revendication 5, **caractérisé en ce qu'**entre la butée (5) et la face intérieure du boîtier (2) est fixée une rondelle de renforcement (12) dont l'ouverture est adaptée au trou allongé (9) dans le boîtier (2).

7. Servofrein selon l'une quelconque des revendications précédentes, **caractérisé en ce que** sont répartis uniformément dans le boîtier (2) sur la périphérie du boîtier plusieurs boulons d'assemblage (4), dont les sections de fixation (1) sont munies d'un filetage (13) qui s'étend respectivement à travers un perçage dans un tablier anti-projections d'un véhicule automobile.
